# FASCICULE DE BREVET EUROPEEN

(11) **EP 3 334 270 B1**
(45) Date de publication et mention de la délivrance du brevet: **27.11.2019**
(21) Numéro de dépôt: 16745781.1
(22) Date de dépôt: 23.06.2016
(51) Int. Cl.: A01D 69/10

(54) **TONDEUSE AGRAIRE ÉLECTRIQUE À FREIN DE STATIONNEMENT ÉLECTROMAGNÉTIQUE**
ELEKTRISCHER RASENMÄHER MIT ELEKTROMAGNETISCHE PARKBREMSE
ELECTRIC LAWN MOWER WITH ELECTROMAGNETIC PARKING BREAK

(30) Priorité: 13.08.2015 FR 1557703
(43) Date de publication de la demande: 20.06.2018
(73) Titulaire: PELLENC, 84120 Pertuis (FR)
(72) Inventeur: PELLENC, Roger, 84120 Pertuis (FR)
(74) Mandataire: Weber, Etienne Nicolas
(86) Numéro de dépôt international: PCT/FR2016/051541
(87) Numéro de publication internationale: WO 2017/025667

(56) Documents cités:
- EP-A1- 0 583 737
- EP-A2- 2 110 295
- DE-A1- 1 931 109
- DE-A1-102007 056 319

## Description

### Domaine technique

La présente invention concerne une tondeuse agraire électrique automotrice, c'est-à-dire une tondeuse dont la mobilité sur une surface à tondre est assurée ou assistée par un moteur électrique couplé à des roues motrices de la tondeuse. Par extension, la tondeuse peut aussi comporter une unité de coupe motorisée par un moteur électrique.

L'invention s'applique à des tondeuses ou des tondeuses-débroussailleuses à conducteur marchant, à conducteur porté, radiocommandée ou robotisée à déplacement autonome.

L'invention trouve des applications particulièrement pour des tondeuses professionnelles destinées à l'entretien de parcs et d'espaces verts publics. Elle trouve également des applications dans l'entretien de jardins domestiques.

### Etat de la technique antérieure

Une apparente facilité d'utilisation des tondeuses automotrices, et en particulier des tondeuses électriques de forte puissance, contraste avec un risque de perte de contrôle lorsque le moteur des tondeuses est à l'arrêt ou hors service. En particulier, lors d'un stationnement, ou en cas d'un arrêt inopiné lors d'une utilisation de la tondeuse sur un terrain pentu, il convient d'assurer le contrôle de la tondeuse et notamment de maîtriser un éventuel déplacement spontané de la tondeuse sous l'effet de son propre poids.

Bien que son usage ne soit pas réservé aux tondeuses électriques il est connu, de manière générale, d'équiper les tondeuses d'un frein de stationnement. Ceci est particulièrement le cas pour les tondeuses lourdes.

Selon la taille et le poids de la tondeuse, le frein de stationnement peut être prévu pour agir sur une ou plusieurs roues de la tondeuse, sur un arbre des roues ou encore sur la transmission de la tondeuse.

Les documents WO2014149737, EP 2740344 et WO2010030280 illustrent différentes possibilités de réalisation d'un frein de stationnement pour une tondeuse et en particulier pour une tondeuse à moteur thermique.

Le document EP-A-2110295 décrit une tondeuse à propulsion électrique comprenant des moteurs électriques couplés respectivement aux roues motrices.

### Exposé de l'invention

La présente invention a pour but de proposer un frein de stationnement spécifiquement adapté aux tondeuses à moteur électrique sans balais et à aimants permanents.

Un but est en particulier de proposer un tel frein de stationnement susceptible d'être activé manuellement ou automatiquement à l'arrêt de la tondeuse.

Un but est encore de proposer un frein de stationnement de secours susceptible d'être activé automatiquement en cas de défaillance de l'alimentation électrique de la tondeuse.

Enfin un but est de proposer un frein de stationnement particulièrement léger, peu coûteux et apte à maintenir la machine en stationnement sur des surfaces en pente.

En vue des objectifs indiqués ci-dessus, l'invention propose plus précisément une tondeuse électrique comprenant une unité de coupe, au moins une batterie pour une alimentation électrique de la tondeuse, au moins deux roues motrices, et au moins un moteur électrique à aimants permanents couplé aux roues motrices. Conformément à l'invention, la tondeuse comporte en outre un frein de stationnement électromagnétique comprenant le moteur électrique.

Le moteur électrique à aimants permanents mis en œuvre dans le frein électromagnétique peut être le moteur d'entrainement de l'unité de coupe, lorsque celui-ci est également couplé aux roues motrices pour le déplacement de la tondeuse.

De préférence toutefois, la tondeuse peut comporter un ou plusieurs moteurs électriques à aimants permanents distincts du moteur d'entraînement de l'unité de coupe, prévus spécifiquement pour l'entrainement des roues motrices. Par exemple, la tondeuse peut comporter deux roues arrière motrices, équipée chacune d'un moteur électrique d'entrainement à aimants permanents qui lui est propre. Ces moteurs sont alors utilisés dans le frein de stationnement électromagnétique. Dans la suite de la description, et par simplification, on fera référence essentiellement à un unique moteur électrique à aimants permanents. Ceci ne préjuge toutefois pas du nombre de moteurs électriques à aimants permanents mis en œuvre dans le frein électromagnétique.

On entend par frein électromagnétique un frein susceptible de contrer un mouvement de la machine par la mise en oeuvre des champs magnétiques, et en particulier des champs magnétiques à l'intérieur du moteur électrique à aimants permanents.

Le frein de stationnement électromagnétique peut comporter au moins un commutateur avec un état ouvert et un état fermé, le commutateur étant connecté à des bornes d'au moins un bobinage du moteur électrique, et configuré pour relier les bornes dudit bobinage dans un court-circuit, dans son état fermé.

Lorsque le ou les bobinages sont en court-circuit, ils s'opposent à la rotation du moteur électrique. En effet, toute rotation du moteur provoque un déplacement relatif entre des aimants permanents et les bobinages du moteur. Ce déplacement s'accompagne alors de courants induits dans les bobinages. Les courants induits provoquent à leur tour un champ magnétique dans chaque bobinage en court-circuit s'opposant à la rotation du moteur. Il en résulte une dissipation de l'énergie mécanique fournie au moteur par circulation de courants dans les bobinages du moteur. Comme les roues motrices de la tondeuse sont couplées au moteur, l'énergie mécanique d'un éventuel déplacement de la tondeuse est dissipée dans le moteur et le mouvement des roues de la tondeuse est automatiquement freiné.

Le même moteur est ainsi utilisé soit pour propulser la tondeuse, soit pour la freiner. Lorsque le moteur est mis sous tension et piloté par des courants dans ses bobinages de façon à générer des champs magnétiques les aimants permanents du moteur sont entrainés en rotation. Lorsque le moteur est hors tension et qu'au moins l'un de ses bobinages est mis en court-circuit, des forces magnétiques sont également susceptibles d'être générées. Ces forces s'opposent alors au déplacement des aimants permanents et à la rotation du moteur.

Il convient de préciser que le frein de stationnement de l'invention n'agit pas lorsque la tondeuse est complètement immobile mais agit dès que la tondeuse à tendance à se déplacer et que les roues motrices initient une rotation, provoquant la rotation du moteur électrique. La rotation induite du moteur entraine alors le déplacement des aimants permanents de ce dernier en regard du ou des bobinages en court-circuit. Ce déplacement génère ainsi des courants induits dans les bobinages, et les courants induits génèrent immédiatement un couple résistant s'opposant à la rotation du moteur.

Il est entendu, qu'un effort important et volontaire d'un utilisateur de la tondeuse, poussant ou tirant la tondeuse, permet, si nécessaire, d'entrainer les roues de la tondeuse avec un couple suffisant pour vaincre le couple de freinage électromagnétique, et provoquer néanmoins un déplacement de la tondeuse. Le couple résistant de freinage électromagnétique est toutefois suffisant pour assurer l'immobilité en stationnement de la machine et empêcher son déplacement, y compris dans une pente, ou sur le plateau d'un véhicule ou d'une remorque utilitaire, lors de son déplacement.

Aussi, la tondeuse peut avantageusement comporter un réducteur mécanique connecté entre le moteur et les roues motrices, le moteur électrique étant couplé aux roues motrices par l'intermédiaire de ce réducteur. Le moteur est plus précisément couplé aux roues motrices de manière qu'une vitesse de rotation des roues motrices soit inférieure à une vitesse de rotation du moteur lorsque le moteur entraine les roues. A l'inverse, la vitesse de rotation du moteur, et plus précisément de son rotor, est plus élevée que la vitesse des roues motrices, lorsque les roues motrices entrainent le moteur. Ainsi le réducteur permet d'améliorer le couple de freinage du moteur, et ce d'autant plus que le rapport de réduction du réducteur est élevé.

Ainsi, le moindre déplacement de la tondeuse, et la moindre rotation des roues motrices, occasionne une rotation du moteur à une vitesse plus élevée et améliore l'efficacité du freinage électromagnétique.

Selon un mode de réalisation préféré de la tondeuse, le moteur électrique est un moteur du type sans balais, comprenant une pluralité de bobinages dans son stator et des aimants permanents dans son rotor. Le commutateur est alors relié aux bornes d'au moins l'un des bobinages du stator.

Le commutateur peut être configuré pour mettre en court-circuit un ou plusieurs bobinages du moteur. La mise en court-circuit de plusieurs bobinages augmente l'efficacité du freinage. Ainsi, et de préférence, le frein comprend une pluralité de commutateurs, reliés aux bornes du moteur et configurés pour mettre en court-circuit l'ensemble des bobinages du moteur, dans leur état fermé, c'est-à-dire lorsque le frein est actif.

Dans une mise en œuvre particulière de l'invention le moteur électrique peut être un moteur triphasé avec trois bobinages de stator. Les trois bobinages sont alors reliés à trois bornes du moteur électrique. Il s'agit, par exemple, d'un montage de type triangle ou étoile. Dans ce cas, le frein électromagnétique comprend deux commutateurs, ayant chacun une première borne, commune, reliée à une première borne du moteur et une deuxième borne reliée respectivement à une deuxième et à une troisième borne du moteur électrique, les premières et deuxièmes bornes de chaque commutateur étant respectivement mises en contact électrique mutuel dans l'état fermé du commutateur. Lorsque les commutateurs sont fermés, les bornes du moteur qui y sont reliés sont mises en court- circuit. Or la mise en court-circuit des bornes du moteur entraine également la mise en court-circuit d'un ou de plusieurs bobinages selon la configuration du moteur.

Le frein électromagnétique de la tondeuse peut être un frein à déclenchement automatique lorsque la tondeuse est hors tension. Ceci permet un déclenchement et un fonctionnement du frein sans courant et seulement lorsque l'alimentation des moteurs est coupée. Ainsi, le frein électromagnétique peut également constituer un système de freinage d'urgence utilisant un coupe-circuit général de l'alimentation de la tondeuse.

Le frein de stationnement électromagnétique peut être déclenché par la mise hors tension de la tondeuse, mais aussi en cas de défaillance de l'alimentation électrique de la tondeuse. En effet, les commutateurs du frein peuvent être du type normalement fermé. Ainsi, la simple absence d'alimentation, quelle qu'en soit la cause, provoque la mise en court-circuit des bobinages du moteur. Cette mesure permet d'utiliser le frein de stationnement indépendamment du bon fonctionnement de l'alimentation électrique de la tondeuse.

Les commutateurs peuvent être des commutateurs électroniques, à semi-conducteurs, et en particulier des transistors à effet de champ du type métal-oxyde-semi-conducteur (MOSFET). Les commutateurs peuvent aussi être des commutateurs électromécaniques, tels les contacteurs d'un relais.

En effet, selon un mode de réalisation particulier de la tondeuse, le commutateur est un commutateur du type fermé au repos pourvu d'une commande électrique reliée à la batterie par l'intermédiaire d'un interrupteur d'alimentation électrique de la tondeuse, de manière à maintenir le commutateur dans l'état ouvert lorsque la tondeuse est sous tension, et de provoquer un retour automatique à l'état fermé lorsque la tondeuse est hors tension. Lorsque le commutateur est du type électromécanique, la commande du commutateur peut être un petit électroaimant agissant sur des contacteurs du commutateur.

L'interrupteur d'alimentation électrique permet ainsi non seulement de commander l'alimentation électrique de la tondeuse mais aussi de déclencher automatiquement le frein de stationnement dès la mise hors tension de la tondeuse par l'utilisateur. D'autres interrupteurs susceptibles de couper l'alimentation électrique de manière automatique, tels que des interrupteurs de sécurité peuvent également être prévus. Ces interrupteurs ont alors le même effet sur le moteur et sur le frein de stationnement qui se déclenche automatiquement.

D'autres caractéristiques et avantages de l'invention ressortent de la description qui suit en référence aux figures des dessins. Cette description est donnée à titre illustratif et non limitatif.

### Brève description des figures

La figure 1 est une perspective d'une tondeuse équipée d'un frein de stationnement conforme à l'invention.
La figure 2A est un schéma électrique d'un frein de stationnement conforme à l'invention utilisant un moteur électrique à trois bornes en configuration de type "étoile".
La figure 2B est un schéma électrique sommaire d'un moteur électrique triphasé en configuration de type "triangle" pouvant remplacer le moteur de la figure 2A.
La figure 3 est un schéma électrique d'un frein de stationnement conforme à l'invention utilisant un moteur électrique à six bornes.

### Description détaillée de modes de mise en œuvre de l'invention

Dans la description qui suit des parties identiques, similaires ou équivalentes des différentes figures sont repérées avec les mêmes signes de référence.

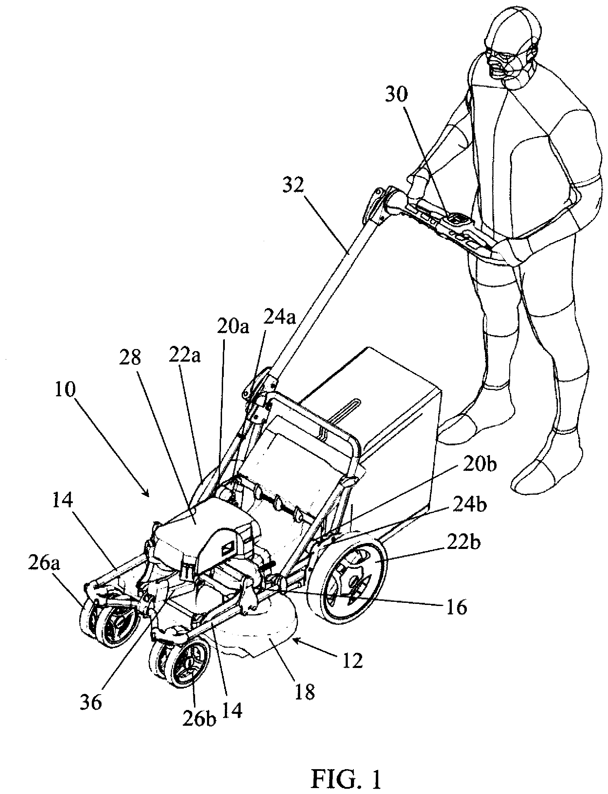

La figure 1 montre une tondeuse 10 à conducteur marchant conforme à l'invention. Elle comprend une unité de coupe 12 montée sur un cadre tubulaire 14. L'unité de coupe 12 est pourvue d'un premier moteur électrique 16 pour l'entrainement en rotation de lames de coupe. Les lames de coupe, protégées par un carter 18, ne sont pas visibles sur la figure 1.

La tondeuse dispose de deux autres moteurs électriques repérés avec les références 20a et 20b. Il s'agit de moteurs destinés au déplacement de la tondeuse. Les moteurs de déplacement 20a, 20b sont disposés au voisinage de roues arrière motrices 22a, 22b auxquels ils sont respectivement couplés au moyen d'un réducteur mécanique 24a, 24b. Les réducteurs mécaniques permettent d'entrainer les roues motrices 22a, 22b avec une vitesse de rotation inférieure à celle des moteurs. Inversement, dans le cas d'un déplacement spontané de la tondeuse, les moteurs sont entrainés en rotation par les roues motrices à une vitesse de rotation supérieure à celle des roues motrices.

Il convient de préciser que les moteurs de déplacement 20a, 20b peuvent entrainer les roues motrices 22a, 22b à des vitesses de rotation identiques ou différentes. Des vitesses de rotation différentes, voire des sens de rotation différents, peuvent intervenir notamment pour faciliter le déplacement de la tondeuse par exemple dans la courbe d'un virage.

Les roues avant doubles 26a, 26b de la tondeuse sont des roues libres. Elles sont montées pivotantes à 360° respectivement autour d'un axe vertical, de façon à faciliter les manœuvres de la tondeuse.

Dans l'exemple de réalisation décrit en référence à la figure 1, le moteur 16 utilisé pour l'entrainement des lames de coupe, de même que les moteurs 20a, 20b utilisés pour le déplacement de la tondeuse, sont des moteurs à aimants permanents. Ces moteurs sont alimentés par une batterie électrique 28 et pilotés par une unité de commande 30. Dans l'exemple de la figure, l'unité de commande est située au sommet d'un guidon 32 de la tondeuse 10.

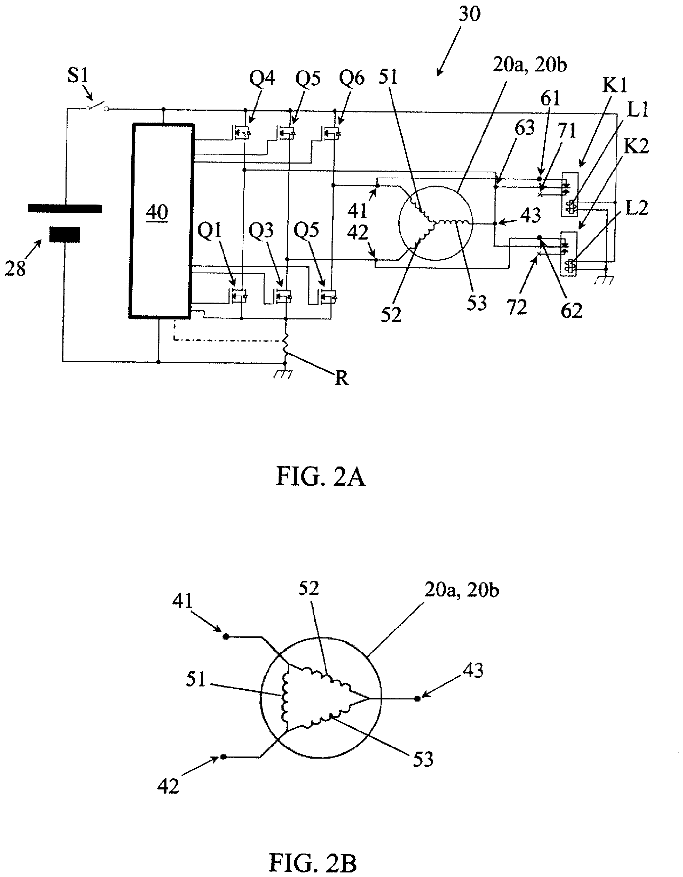

La figure 2A montre une partie du schéma électrique de l'unité de commande associée à l'un des moteurs électriques de déplacement 20a, 20b et du schéma électrique du frein de stationnement associé à ce moteur. Il s'agit en l'occurrence d'un moteur triphasé en configuration "étoile" à trois bornes 41, 42, 43. Bien qu'un seul moteur soit représenté sur la figure, il convient de noter que le deuxième moteur, non représenté, est alimenté de la même façon. Pour cette raison, le seul moteur électrique représenté porte les deux références 20a et 20b.

Pour une tondeuse électrique à moteur électrique unique, c'est-à-dire une tondeuse dont le moteur de l'unité de coupe serait également couplé aux roues motrices, le moteur peut également être associé à une unité de commande selon le schéma de la figure 2A.

L'unité de commande 30 comprend une carte électronique 40 alimentée par la batterie 28. On peut noter que la batterie est connectée à la carte électronique 40 par l'intermédiaire d'un interrupteur S1. L'interrupteur S1 représente de manière générale le ou les interrupteurs susceptibles de mettre sous tension ou hors tension la tondeuse électrique et notamment les moteurs de déplacement 20a, 20b de la tondeuse. Il s'agit, par exemple, d'un interrupteur général de mise sous tension/hors tension, actionnable par l'utilisateur. Il est alors situé, par exemple, sur une interface de l'unité de commande 30 visible à la figure 1. A titre d'alternative, l'interrupteur S1 peut également être situé sur la batterie 28. Il peut aussi être constitué par l'interrupteur d'un dispositif de coupure électrique d'urgence ou de sécurité.

La carte électronique 40 pilote une pluralité de transistors de puissance. Il s'agit, par exemple, de transistors de type MOSFET (transistor à effet de champ métal-oxyde-semi-conducteur). Les transistors sont repérés avec les références Q1 à Q6 et sont reliés aux bornes 41, 42 et 43 du moteur 20a, 20b. Dans l'exemple de la figure 2A, Les transistors sont utilisés comme des commutateurs et sont soit dans un état bloqué, soit dans un état passant. Trois des transistors Q2, Q4 et Q6 relient respectivement la borne positive de la batterie aux trois bornes 41, 42 et 43 du moteur. De manière symétrique, trois autres transistors Q1, Q3 et Q5 relient la borne négative de la batterie aux bornes 41, 42 et 43 du moteur.

La carte électronique 40 connectée aux grilles des transistors, permet de commander l'alimentation successive de différents bobinages 51, 52, 53 du stator du moteur. Il s'agit de mettre successivement l'un des transistors Q2, Q4 et Q6 relié à la borne positive de la batterie et l'un des transistors Q1, Q3 et Q5 relié à la borne négative de la batterie dans un état passant, et de maintenir les autres transistors dans un état bloqué. Les transistors sont mis dans un état conducteur ou bloqué selon une séquence adaptée à la commande souhaitée de rotation du rotor du moteur. L'alimentation successive de différents groupes de bobinages 51, 52, 53 du stator permet en effet de créer un champ magnétique tournant qui entraine le rotor à aimants permanents du moteur 20a, 20b en rotation.

La référence R désigne une résistance électrique de très faible valeur, en série avec les transistors et destinée à mesurer le courant qui traverse les différents bobinages du moteur. La mesure de ce courant est exploitée par la carte 40 pour déterminer la position effective du rotor du moteur et pour synchroniser les champs magnétiques tournants avec la position du rotor.

La carte électronique 40 permet de la même façon de piloter le deuxième moteur de déplacement, non représenté, avec un jeu de transistors de puissance comparable aux transistors Q1 à Q6 de la figure 2A.

Le frein de stationnement de la tondeuse comprend deux commutateurs K1 et K2 électromécaniques également connectés aux bornes 41, 42, 43 du moteur 20a, 20b. Les commutateurs K1 et K2 présentent chacun une première borne commune 63 reliée à l'une des bornes du moteur, en l'occurrence la borne 43. Le premier commutateur K1 présente en outre une deuxième borne 61 relié à une autre borne 41 du moteur et une borne libre 71. De la même façon le deuxième commutateur K2 présente une deuxième borne 62 reliée à la troisième borne 42 du moteur et une borne libre 72.

Chaque commutateur est pourvu d'un électroaimant de commande L1, L2 relié à la batterie 28 par l'intermédiaire de l'interrupteur S1.

Lorsque l'interrupteur S1 est fermé, la tondeuse est sous tension et les électroaimants 72 des commutateurs K1 et K2 sont alimentés. Les électroaimants agissent sur un contacteur qui relie respectivement la borne commune 63 des commutateurs à leur borne libre 71, 72. Dans ce cas, le frein est inactif. Les bornes 41, 42 et 43 sont alimentées par les transistors Q1 à Q6 conformément au pilotage de la carte électronique 40.

Lorsque l'interrupteur S1 est ouvert, comme le montre la figure 2A, la carte électronique 40 et les transistors de puissance Q1 à Q6 sont hors tension et le moteur 20a, 20b n'est plus alimenté. De la même façon, les électroaimants L1, L2 ne sont plus alimentés. Or, les commutateurs K1 et K2 sont des commutateurs du type fermé au repos. Ainsi, lorsque les électroaimants L1 et L2 ne sont plus alimentés, le contacteur vient automatiquement dans une position dans laquelle il relie la borne commune 63 des commutateurs à leur deuxième borne respective 61, 62.

Ainsi, lorsque l'interrupteur S1 est ouvert, les bornes 41, 42 et 43 du moteur se trouvent deux à deux en court-circuit. Dans cet état, une éventuelle rotation spontanée du rotor à aimants permanents du moteur électrique 20a, 20b, devant les bobinages du stator, conduit les bobinages 51, 52, 53 à générer un champ de freinage. Ce champ a pour effet de créer un couple résistant qui s'oppose à la rotation du rotor et donc des roues couplées au moteur. L'énergie fournie au rotor par les roues motrices est dissipée dans les bobinages.

Il convient de préciser que l'utilisation d'un seul commutateur ne mettant en court-circuit que deux des bornes du moteur, est également envisageable, avec toutefois une efficacité de freinage réduite, créant au niveau des roues un couple résistant plus faible.

Par ailleurs, les deux commutateurs K1 et K2 peuvent être remplacés par un unique relais à contacteurs multiples.

Enfin, les commutateurs K1 et K2, électromécaniques, peuvent être remplacés par des commutateurs électroniques, remplissant la même fonction de court-circuiter le moteur en l'absence d'alimentation.

La figure 2B montre un moteur électrique 20a, 20b dont les bobinages 51, 52 et 53 sont dans une configuration de type triangle. Il peut remplacer le moteur 20a, 20b de la figure 2A. Contrairement à la figure 2A où deux bobinages sont respectivement connectés en série entre deux bornes successives du moteur, un seul bobinage est connecté entre deux bornes successives du moteur de la figure 2B. L'alimentation ou la mise en court-circuit des bobinages du moteur dans la configuration en triangle est individuelle.

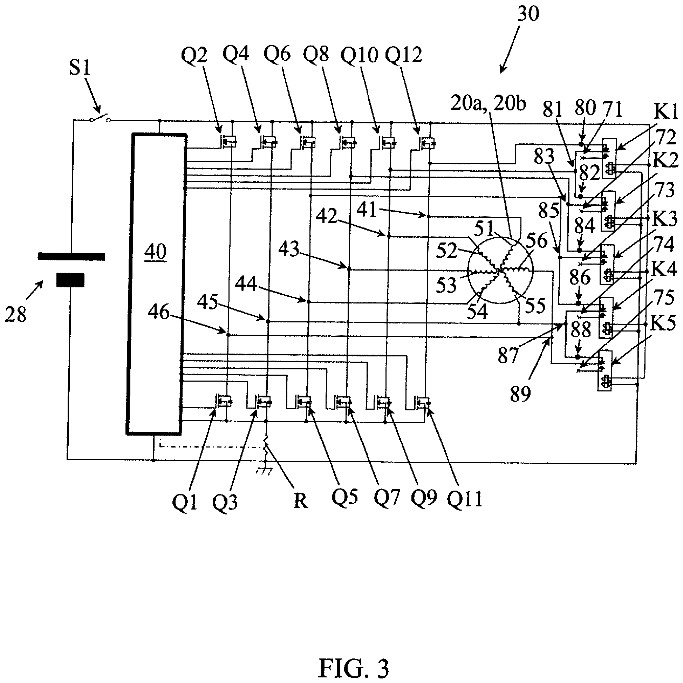

La figure 3, montre le schéma électrique d'une unité de commande 30 et du frein de stationnement électromagnétique, adaptés à un moteur de déplacement 20a, 20b à six phases et à six bornes d'alimentation 41, 42, 43, 44, 45, 46.

Le moteur 20a, 20b est alimenté par l'intermédiaire de douze transistors de puissance. Six transistors Q2, Q4, Q6, Q8, Q10 et Q12 sont connectés à la borne positive de la batterie 28 et six transistors de puissance Q1, Q3, Q5, Q7, Q9 et Q11 sont connectés à la borne négative de la batterie 28. Les transistors sont pilotés par la carte électronique 40 et fournissent respectivement des courants d'alimentation aux bobinages 51, 52, 53, 54, 55, 56 du moteur 20a, 20b.

Le frein de stationnement électromagnétique met en jeu cinq commutateurs électromécaniques K1, K2, K3, K4, K5 du type normalement fermés, et maintenus ouverts lorsque leur commande respective est alimentée par la batterie 28.

Chaque commutateur comprend un contacteur relié à une première borne 81, 83, 85, 87 du commutateur. Lorsque les commutateurs K1, K2, K3, K4, K5 sont sous tension, le contacteur de chaque commutateur relie respectivement la première borne à une borne libre 71, 72, 73, 74, 75. Le circuit électrique du frein est ouvert et le frein est inactif.

En revanche, lorsque les commutateurs K1, K2, K3, K4, K5 ne sont pas sous tension, c'est-à-dire lorsque l'interrupteur S1 est ouvert, le contracteur de chaque commutateur relie la première borne 81, 83, 85, 87, 89 du commutateur respectivement à une deuxième borne 80, 82, 84, 86, 88 du commutateur. La première borne et la deuxième borne de chaque commutateur sont respectivement connectées à deux bornes successives ou tout au moins distinctes du moteur. Ainsi les bornes 80, 81 du premier commutateur se trouvent connectées aux bornes 41 et 42 du moteur, les bornes 82, 83 du deuxième commutateur se trouvent connectées aux bornes 42 et 43 du moteur, les bornes 84 et 85 du troisième commutateur se trouvent connectées aux bornes 44 et 46 du moteur, les bornes 86, 87 du quatrième commutateur se trouvent connectées aux bornes 42 et 43 du moteur, et les bornes 88 et 89 du cinquième commutateur se trouvent connectées aux bornes 44 et 46 du moteur. Dans cet état, les bornes successives du moteur se trouvent deux à deux en court-circuit. Il en va de même pour les bobinages connectés entre les bornes. Le moteur est alors utilisé comme un frein, d'une manière comparable à celle exposée en relation avec la figure 2A.

Il convient de préciser qu'il est également possible de ne court-circuiter qu'une partie des bobinages du moteur, avec toutefois une efficacité de freinage réduite.

Selon une variante à la réalisation de la figure 3, les commutateurs K1 à K5 peuvent être remplacés par un relais à commande unique et pourvu de cinq contacteurs autonomes. Ils peuvent aussi être remplacés par des commutateurs à semi-conducteurs.

Selon un schéma comparable aux figures 2A et 3 il est possible d'adapter le système de freinage à tout moteur électrique, quel que soit son nombre de phases (supérieur à deux).

## Revendications

1. Tondeuse électrique (10) comprenant une unité de coupe (12), au moins une batterie (28) pour une alimentation électrique de la tondeuse, au moins deux roues motrices (22a, 22b), et au moins un moteur électrique, à aimants permanents, (16, 20a, 20b) couplé aux roues motrices, **caractérisée par** un frein de stationnement électromagnétique comprenant le moteur électrique (20a, 20b).

2. Tondeuse électrique selon la revendication 1, comprenant au moins un réducteur mécanique (24a, 24b) connecté entre le moteur (20a, 20b) et les roues motrices (22a, 22b), le moteur électrique est couplé aux roues motrices par l'intermédiaire du réducteur.

3. Tondeuse électrique selon la revendication 1 ou 2, dans laquelle le frein de stationnement électromagnétique comprend au moins un commutateur (K1, K2, K3, K4, K5) avec un état ouvert et un état fermé, le commutateur étant connecté à des bornes (41, 42, 43, 44, 45, 46) d'au moins un bobinage (51, 52, 53, 54, 55, 56) du moteur électrique, et configuré pour relier les bornes dudit bobinage dans un court-circuit, dans l'état fermé.

4. Tondeuse électrique selon la revendication 3, dans laquelle le moteur électrique comprend une pluralité de bobinages de stator (51, 52, 53, 54, 55, 56), le commutateur (K1, K2, K3, K4, K5) étant relié aux bornes (41, 42, 43, 44, 45, 46) d'au moins l'un des bobinages du stator.

5. Tondeuse électrique selon la revendication 4, dans laquelle le frein de stationnement électromagnétique comprend une pluralité de commutateurs (K1, K2, K3, K4, K5) configurés pour mettre en court-circuit l'ensemble des bobinages du moteur (51, 52, 53, 54, 55, 56), lorsque le frein est actif.

6. Tondeuse électrique selon l'une des revendications précédentes, dans lequel le moteur électrique (20a, 20b) est un moteur triphasé avec trois bobinages de stator (51, 52, 53) reliés à trois bornes (41, 42, 43) du moteur électrique, et dans laquelle le frein de stationnement comprend deux commutateurs (K1, K2), ayant chacun une première borne (63), commune, reliée à une première borne (43) du moteur et une deuxième borne (61, 62) reliée respectivement à une deuxième et à une troisième borne (42, 43) du moteur électrique, les premières et deuxièmes bornes de chaque commutateur (K1, K2) étant respectivement mises en contact électrique dans la position fermée dudit commutateur.

7. Tondeuse électrique selon l'une quelconque des revendications 3 à 6, dans laquelle le frein de stationnement électromagnétique est un frein à déclenchement automatique, lorsque la tondeuse est hors tension.

8. Tondeuse électrique selon la revendication 7, dans laquelle le commutateur (K1, K2) est du type fermé au repos, une commande (L1, L2) du commutateur étant reliée à la batterie (28) par l'intermédiaire d'un interrupteur (S1) d'alimentation électrique de la tondeuse, de manière à maintenir le commutateur (K1, K2) dans l'état ouvert lorsque la tondeuse est sous tension, et de provoquer un retour automatique à l'état fermé lorsque la tondeuse est hors tension.

9. Tondeuse électrique selon l'une des revendications 3 à 8, dans lequel le commutateur (K1, K2) est un commutateur à transistors de type MOSFET.

10. Tondeuse électrique selon l'une des revendications précédentes dans lequel le moteur électrique est un moteur (16) d'entrainement de l'unité de coupe.

11. Tondeuse électrique selon l'une des revendications 1 à 9, comprenant un moteur électrique (16) d'entrainement de l'unité de coupe distinct du moteur (20a, 20b) couplé aux roues motrices (22a, 22b).

12. Tondeuse électrique selon la revendication 11, comprenant deux moteurs électriques (20a, 20b) couplés respectivement aux deux roues arrière motrices (22a, 22b), et dans laquelle le frein de stationnement électromagnétique comprend les deux moteurs (20a, 20b) électriques couplés aux roues arrière motrices.

## Patentansprüche

1. Elektrischer Rasenmäher (10), der eine Schneideinheit (12), mindestens eine Batterie (28) zur Versorgung des Rasenmähers mit Strom, mindestens zwei angetriebene Räder (22a, 22b) und mindestens einen Elektromotor mit Dauermagneten (16, 20a, 20b), der an die angetriebenen Räder gekoppelt ist, umfasst, **gekennzeichnet durch** eine elektromagnetische Parkbremse, die den Elektromotor (20a, 20b) umfasst.

2. Elektrischer Rasenmäher nach Anspruch 1, umfassend mindestens ein mechanisches Reduktionsmittel (24a, 24b), das zwischen dem Motor (20a, 20b) und den angetriebenen Rädern (22a, 22b) verbunden ist, wobei der Elektromotor über das Reduktionsmittel an die angetriebenen Räder gekoppelt ist.

3. Elektrischer Rasenmäher nach Anspruch 1 oder 2, wobei die elektromagnetische Parkbremse mindestens einen Schalter (K1, K2, K3, K4, K5) mit einem offenen Zustand und einem geschlossenen Zustand umfasst, wobei der Schalter mit Anschlüssen (41, 42, 43, 44, 45, 46) von mindestens einer Wicklung (51, 52, 53, 54, 55, 56) des Elektromotors verbunden und dazu konfiguriert ist, die Anschlüsse der Wicklung in dem geschlossenen Zustand während eines Kurzschlusses zu verbinden.

4. Elektrischer Rasenmäher nach Anspruch 3, wobei der Elektromotor eine Vielzahl von Statorwicklungen (51, 52, 53, 54, 55, 56) umfasst, wobei der Schalter (K1, K2, K3, K4, K5) mit den Anschlüssen (41, 42, 43, 44, 45, 46) von mindestens einer der Statorwicklungen verbunden ist.

5. Elektrischer Rasenmäher nach Anspruch 4, wobei die elektromagnetische Parkbremse eine Vielzahl von Schaltern (K1, K2, K3, K4, K5) umfasst, die dazu konfiguriert sind, sämtliche Wicklungen des Motors (51, 52, 53, 54, 55, 56) kurzzuschließen, wenn die Bremse aktiv ist.

6. Elektrischer Rasenmäher nach einem der vorhergehenden Ansprüche, wobei es sich bei dem Elektromotor (20a, 20b) um einen Dreiphasenmotor mit drei Statorwicklungen (51, 52, 53) handelt, die mit drei Anschlüssen (41, 42, 43) des Elektromotors verbunden sind, und wobei die Parkbremse zwei Schalter (K1, K2) umfasst, von denen jeder einen gemeinsamen ersten Anschluss (63), der mit einem ersten Anschluss (43) des Motors verbunden ist, und einen zweiten Anschluss (61, 62), der jeweils mit einem zweiten und mit einem dritten Anschluss (42, 43) des Elektromotors verbunden ist, aufweist, wobei die ersten und zweiten Anschlüsse von jedem Schalter (K1, K2) jeweils in der geschlossenen Position des Schalters in elektrischem Kontakt stehen.

7. Elektrischer Rasenmäher nach einem der Ansprüche 3 bis 6, wobei es sich bei der elektromagnetischen Parkbremse um eine Bremse mit automatischer Auslösung, wenn der Rasenmäher stromlos ist, handelt.

8. Elektrischer Rasenmäher nach Anspruch 7, wobei der Schalter (K1, K2) normalerweise von der geschlossenen Art ist, wobei eine Steuerung (L1, L2) des Schalters über einen Stromversorgungsschalter (S1) des Rasenmähers mit der Batterie (28) verbunden ist, um den Schalter (K1, K2) in dem offenen Zustand zu halten, wenn der Rasenmäher unter Spannung steht, und eine automatische Rückkehr in den geschlossenen Zustand zu bewirken, wenn der Rasenmäher stromlos ist.

9. Elektrischer Rasenmäher nach einem der Ansprüche 3 bis 8, wobei es sich bei dem Schalter (K1, K2) um einen Transistorschalter von der Art MOSFET handelt.

10. Elektrischer Rasenmäher nach einem der vorhergehenden Ansprüche, wobei es sich bei dem Elektromotor um einen Antriebsmotor (16) der Schneideinheit handelt.

11. Elektrischer Rasenmäher nach einem der Ansprüche 1 bis 9, umfassend einen Antriebselektromotor (16) der Schneideinheit, der von dem Motor (20a, 20b), der an die angetriebenen Räder (22a, 22b) gekoppelt ist, getrennt ist.

12. Elektrischer Rasenmäher nach Anspruch 11, umfassend zwei Elektromotoren (20a, 20b), die jeweils an zwei hintere angetriebene Räder (22a, 22b) gekoppelt sind, und wobei die elektromagnetische Parkbremse die zwei Elektromotoren (20a, 20b) umfasst, die an die hinteren angetriebenen Räder gekoppelt sind.

## Claims

1. An electric mower (10) comprising a cutting unit (12), at least one battery (28) for an electrical power supply for the mower, at least two driving wheels (22a, 22b) and at least one electric motor, with permanent magnets (16, 20a, 20b) that is coupled to the driving wheels, **characterised by** an electromagnetic parking brake comprising the electric motor (20a, 20b).

2. An electric mower according to claim 1 comprising at least one reducing transmission (24a, 24b) connected between the motor (20a, 20b) and the driving wheels (22a, 22b), the electric motor is coupled to the driving wheels by way of the reducing transmission.

3. An electric mower according to claim 1 or claim 2 wherein the electromagnetic parking brake comprises at least one switch (K1, K2, K3, K4, K5) having an open state and a closed state, the switch being connected to terminals (41, 42, 43, 44, 45, 46) of at least one winding (51, 52, 53, 54, 55, 56) of the electric motor and configured to connect the terminals of said winding in a short-circuit in the closed state.

4. An electric mower according to claim 3 wherein the electric motor comprises a plurality of stator windings (51, 52, 53, 54, 55, 56), the switch (K1, K2, K3, K4, K5) being connected to the terminals (41, 42, 43, 44, 45, 46) of at least one of the windings of the stator.

5. An electric mower according to claim 4 wherein the electromagnetic parking brake comprises a plurality of switches (K1, K2, K3, K4, K5) configured to short-circuit all of the windings of the motor (51, 52, 53, 54, 55, 56) when the brake is active.

6. An electric mower according to one of the preceding claims wherein the electric motor (20a, 20b) is a three-phase motor having three stator windings (51, 52, 53) connected to three terminals (41, 42, 43) of the electric motor and wherein the parking brake comprises two switches (K1, K2) each having a first common terminal (63) connected to a first terminal (43) of the motor and a second terminal (61, 62) respectively connected to a second and a third terminal (42, 43) of the electric motor, the first and second terminals of each switch (K1, K2) being respectively brought into electrical contact in the closed position of said switch.

7. An electric mower according to any one of claims 3 to 6 wherein the electromagnetic parking brake Is a brake with automatic triggering when the mower is switched off.

8. An electric mower according to claim 7 wherein the switch (K1, K2) is of the type which is closed in the rest state, a control (L1, L2) of the switch being connected to the battery (28) by way of an electrical power switch (S1) of the mower such as to keep the switch (K1, K2) in the open state when the mower is powered and to cause an automatic return to the closed state when the mower is switched off.

9. An electric mower according to one of claims 3 to 8 wherein the switch (K1, K2) is a transistor switch of MOSFET type.

10. An electric mower according to one of the preceding claims wherein the electric motor is a motor (16) for driving the cutting unit.

11. An electric mower according to one of claims 1 to 9 comprising an electric motor (16) for driving the cutting unit, that is separate from the motor (20a, 20b) coupled to the driving wheels (22a, 22b).

12. An electric mower according to claim 11 comprising two electric motors (20a, 20b) respectively coupled to the two rear driving wheels (22a, 22b) and wherein the electromagnetic parking brake comprises the two electric motors (20a, 20b) coupled to the rear driving wheels.
